# EUROPEAN PATENT SPECIFICATION

(11) **EP 2 203 017 B1**
(45) Date of publication and mention of the grant of the patent: **23.01.2013**
(21) Application number: 09176637.8
(22) Date of filing: 20.11.2009
(51) Int. Cl.: H04W 36/30, H04W 36/08, H04W 84/12

(54) **Method for determining channel quality**
Verfahren zur Bestimmung der Kanalqualität
Procédé pour déterminer la qualité de canal

(30) Priority: 24.12.2008 EP 08306020
(43) Date of publication of application: 30.06.2010
(73) Proprietor: Thomson Licensing, 92130 Issy-les-Moulineaux (FR)
(72) Inventor: Zhang, Yan Feng, 92648, BOULOGNE cedex (FR); Chen, Jian Feng, 92648, BOULOGNE cedex (FR); Zou, Li, 92648, BOULOGNE cedex (FR)
(74) Representative: Ruellan-Lemonnier, Brigitte

(56) References cited:
- US-A1- 2008 064 404
- US-B1- 7 421 248
- MHATRE V ET AL: "USING SMART TRIGGERS FOR IMPROVED USER PERFORMANCE IN 802.11 WIRELESS NETWORKS" MOBISYS 2006. THE 4TH. INTERNATIONAL CONFERENCE ON MOBILE SYSTEMS, APPLICATIONS AND SERVICES. UPPSALA, SWEDEN, JUNE 19 - 22, 2006; [INTERNATIONAL CONFERENCE ON MOBILE SYSTEMS, APPLICATIONS AND SERVICES], NEW YORK, NY : ACM, US, vol. CONF. 4, 19 June 2006 (2006-06-19), pages 246-259, XP001541428 ISBN: 978-1-59593-195-5

## Description

### TECHNICAL FIELD

The present invention relates to data communication, and more particularly, relates to a method and a device for determining channel quality.

### BACKGROUND

The IEEE 802.11 standard defines two operating modes: an ad hoc mode and an infrastructure mode. In ad hoc mode, two or more stations (STAs) can recognize each other, and establish a peer-to-peer communication without need of an access point (AP). But in infrastructure mode, at least one AP is needed. An AP together with its all associated STAs is called a basic service set (BSS), which is the basic building block of an IEEE 802.11 wireless local area network (LAN). A STA communicates with the other STAs of the same BSS through the AP. A set of one or more interconnected BSSs and integrated LANs forms an Extended Service Set (ESS), which is identified by its Service Set Identifier (SSID). The set of interconnected BSSs must have a common network name or SSID. And they can work on the same channel, or work on different channels to boost aggregate throughput.

The coverage of an AP is called basic service area (BSA). Sometimes, several APs are placed in such a way that their BSAs are overlapped so as to form a full coverage for a certain area. In this case, handover may be carried out when a STA moves from the BSA of an AP to that of another.

The handover procedure refers to a sequence of actions and messages exchanged between the STA and neighbor APs, resulting in the transfer of STA's connection from the serving AP to the new AP. Herein, the establishment of connection in a handover procedure between a STA and an AP usually consists of deletion, detection, authentication and association processes. Deletion process is needed when a STA intends to tear down the connection with its original AP. The detection is a process whereby the STA determines the channel quality of the channel on which an AP is working. The authentication is a process whereby the AP either accepts or rejects the identity of a radio network interface card (NIC) of a STA. The association enables the AP to allocate resources for and synchronize with a radio NIC. A NIC begins the association process by sending to an AP an association request carrying information about the NIC and the SSID of the network it wishes to associate with. After receiving the association request, the AP considers associating the NIC, (if accepted) reserves memory space and establishes an association ID for the NIC, and sends to the radio NIC an association response containing an acceptance notice. Moreover, a probe request frame and probe response frame are usually needed upon handover. A probe request frame is sent by a STA when the STA needs to obtain information from an AP. For example, a radio NIC of the STA would send a probe request to determine which APs are within the range. A probe response frame will be sent in response to a probe request frame. More details about the above frames/messages can be found in the IEEE 802.11 standard of "Information technology - Telecommunications and information exchange between systems - Local and metropolitan area networks -Specific requirements - Part 11: Wireless LAN Medium Access Control (MAC) and Physical Layer (PHY) specifications", IEEE Std 802.11TM - 2007 (Revision of IEEE Std 802.11 - 1999), published on June 12, 2007.

During the handover, the connection between the STA and the serving AP is broken so that the STA is not able to send or receive any data packet until establishing a new connection with the new AP. So there is a communication disruption period beginning from the time the existing connection is broken to the time when the new connection is established. Generally, the communication disruption period is comprised of a scanning process, and an authentication and re-association process. During the scanning process, the STA needs to switch to each candidate radio frequency (channel) to discover whether there is an AP working on this channel. This scanning process normally takes up to several hundred milliseconds and occupies over 90% of the whole handover latency. The authentication and re-association process takes only a few milliseconds.

Currently, the channel scanning process can be carried out in either passive or active mode. In passive mode of channel scanning, the STA switches to each candidate channel and listens to periodic beacon frames from APs. The beacon frame is used by an AP to announce its presence, its working channel, its BSSID and other parameters for STA's access. The AP broadcasts its beacon frames periodically (typically every 100ms). Thus, in order to get information about all the APs in a certain channel, the STA has to stay in the channel for at least a beacon period. In active mode of channel scanning, the STA broadcasts probe requests in each candidate channel and waits for probe responses from neighbor APs working on that channel. An AP sends a probe response to the STA after receiving the probe request. The probe response frame of the probe response carries the same parameters as in the beacon frame. In both modes, the STA selects the best AP based on the information received from APs after scanning all candidate channels, and then performs the authentication and re-association process. The channel quality detection process in either active or passive mode, usually takes about 100∼300 millisecond.

The Voice over IP (VoIP) and other real time services like video conference put strict requirements on the handover disruption period, e.g., the biggest disruption period should be less than 20 milliseconds for VoIP application

D1: US 2008/064404 A1 discloses a method and device for use terminal based fast handoff. In the paragraph [0071], it discloses "the STA chooses to a channel to broadcast a probe request. With probe request, APs in the same channel and overlapped channels will send back probe responses", and the responses are used to "get information of the AP such as the BSSID and the working channel" other than channel quality. In addition, it also discloses a method to determine channel quality. Seen from paragraph [0051] "the neighbour APs belonging to the same group work on the same channel", [0054] "In each PBP subphase, the probing unit 302 probes signal qualities of neighbor APs in one group in a manner of active probing", and the definition of active probe (active scanning), the STA firstly switches to the working channel of a group, and then broadcasts a probe request so as to collect the channel qualities of APs working on the same channel in this group.

D2: MHATRE V ET AL: "USING SMART TRIGGERS FOR IMPROVED USER PERFORMANCE IN 802.11 WIRELESS NETWORKS" discloses that using smart triggers for improved user performance in 802.11 wireless networks. Particularly, pages 249-250 paragraph 3.3 points out "these beacons [from the overlapping channels] are attenuated by varying factors (depending on channel separation" and "similar to the results presented in (A. Mishra, E. Rozner, S. Banerjee, and W. Arbaugh, "Exploiting Partially Overlapping Channels in Wireless Networks: Turning a Peril into an Advantage" in ACM SIGCOMM IMC, Berkeley, CA, USA, Oct. 2005), we can determine the attenuation factors for each of the adjacent channels through measurements, and then correct the RSSI values of the beacons received on those channels".

Therefore, a new channel quality determination method is desired so as to reduce the time period for channel quality detection.

### SUMMARY

According to an aspect of the present invention, it is provided a method for determining channel quality for a second channel among a plurality of channels, wherein, said second channel is overlapping with a first channelin frequency, and a client device is working on the first channel, and wherein a channel separation number between a channel sending a request message for probing channel quality and a channel on which a response message is carried refers to separation distance in frequency between center frequencies of the channel sending a request message for probing channel quality and the channel on which a response message is carried,

the method comprising at the side of the client device the steps of sending a request message for probing channel quality through the first channel; receiving a response message carried on said second channel in response to said request message through said first channel; and determining the channel quality of said second channel by using a compensatory value corresponding to channel separation number referring to the separation distance between said first channel and said second channel to compensate signal strength value of said response message.

According to the aspect of the present invention, the channel quality of at least one channel can be determined by sending a single request message on a channel overlapping every one of the at least one channel, which improves the efficiency of determination.

It is to be understood that more aspects and advantages of the invention will be found in the following detailed description of the present invention.

### BRIEF DESCRIPTION OF THE DRAWINGS

The accompanying drawings, which are included to provide a further understanding of the invention and are incorporated in and constitute a part of this application, will be used to illustrate an embodiment of the invention, as explained by the description. The invention is not limited to the embodiment.

In the drawings:
Fig. 1 is a channel frequency overlap chart of the prior art.
Fig. 2 is a flow chart illustrating a method for detecting channel qualities of a set of channels according to the present embodiment of the invention.
Fig. 3 is flow chart illustrating a method for handover between APs according to the present embodiment of the invention.
Fig. 4 is a block diagram schematically illustrating the STA according to the present embodiment of the invention.

### DETAILED DESCRIPTION

The embodiment of the present invention will now be described in detail in conjunction with the drawings. In the following description, some detailed descriptions of known functions and configurations may be omitted for clarity and conciseness.

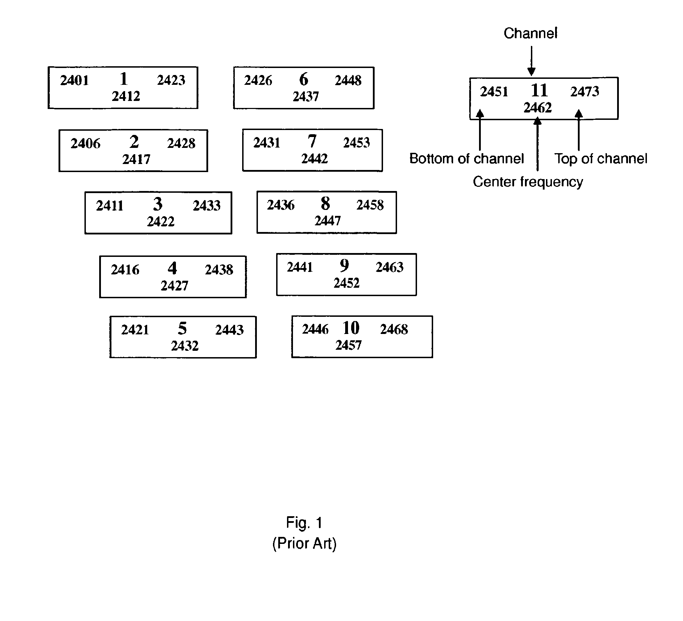

Figure 1 depicts a channel frequency overlap chart according to the 802.11 standard. Specifically, in the 802.11 b and 802.11 g standards, there are 11 channels available for use. The channel number (1, 2, 3..., and 11) represents the center frequency on which the radio operates (e.g. 2.412 GHz for channel 1) while each channel has a bottom value and a top value. The center frequencies of the adjacent channels are separated by 5 MHz while each channel has a spread of 22 MHz around the center frequency.

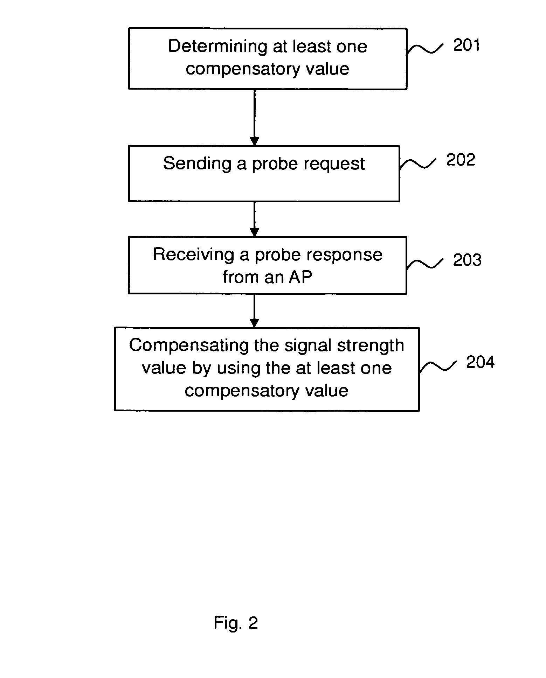

According to the present embodiment of the invention, an overlapping channel probing (OCP) method is proposed, to reduce the time taken by the scanning process in the communication disruption period. In this method, the 11 channels are dynamically divided into three groups according to the current working channel of the STA, herein such a group is named 'POCG' (Partially Overlapping Channel Group). Each POCG is assigned a probing channel among the channels of its group. Thus, each POCG consists of a probing channel and at least one partially overlapped channel. Preferably, the STA's current working channel is chosen as the probing channel in the POCG it belongs to. In order to obtain all channel quality information of a POCG, the STA only sends a probe request on a selected channel of this POCG. After receiving probe responses from APs whose working channel is overlapping with the selected channel, the STA further makes signal strength compensation for these probe responses received on channels of this POCG. The signal strength value after compensation is used to represent the channel quality of the nearby APs and is used as reference for the handover decision. Fig. 2 is a flowchart illustrating a method for detecting channel qualities of a set of adjacent channels that are overlapping according to the present embodiment:
- **-In step 201**, the STA determines at least one compensatory value used for compensating the signal strength value. The compensatory value can be predetermined and stored in a storage module of the STA, or it can be calculated after the STA establishes a connection with an AP for the first time, which means the compensatory value does not need to be calculated again if the STA hands over from one AP to another. As an example, the STA sends probe requests on each of the following: its current working channel, overlapping channel(s) with channel separation 1, and overlapping channel(s) with channel separation 2 respectively. Herein, the "channel separation number" refers to the separation distance between the probing channel and the overlapping channel, for example, if the probing channel is channel 3 and channel separation number is 1, then the overlapping channels satisfying the conditions are channel 2 and channel 4, and the overlapping channels are the channel 1 and channel 5 if the probing channel is channel 3 and the channel separation number is 2. In response to the probe requests, the STA will receive probe responses from the AP it is associated with and then calculate the average signal strength value respectively for the channel separation 0, 1, and 2 based on the received probe responses. The differences of the average signal strength value are calculated and stored by the STA as the compensatory values for compensation of the signal strength value. To be specific, after the STA establishes the connection with an AP on the working channel, e.g. channel 3 of the AP, the STA sends several probe requests (e.g. 5 probe requests) on the channel 3. In response to the probe requests, the AP sends probe responses to the STA. After the STA receives the probe responses from the AP, it calculates the average signal strength value and stores it as S(3,3). Here, in S(i,j), the parameter i represents the channel on which the AP is working and the parameter j represents the channel on which the probe requests and responses are sent and received respectively. The STA then switches its channel to the channel 4 and sends several probe requests through channel 4. Because the channel 3 and channel 4 are overlapping, the AP working on the channel 3 can detect the probe requests sent by the STA through channel 4, but it sends probe responses through the channel 3. After the STA working on the channel 4 receives the probe response, which is sent by the AP through the channel 3, it calculates and stores the average signal strength value S(3,4). In the same way, the average signal strength value S(3,5) is obtained. After obtaining the three average signal strength values, the difference value S1 between S(3,3) and S(3,4) is calculated as the compensatory value for the channel separation 1, and the difference value S2 between S(3,3) and S(3,5) is calculated as the compensatory value for the channel separation 2.
- **-In the step 202**, the STA sends a probe request on a probing channel of a POCG;
- **-In the step 203**, the STA receives a probe response from each AP whose working channel is overlapping with the probing channel. If a probe request is sent on the probing channel 3, the AP working on any of its overlapped channels 1, 2, 3, 4, 5, 6, and 7 can detect the probe request and send a probe response even though the probe responses on channels 6 and 7 are weak. Here, when an AP sends a probe response, it presents its current working channel (Current Channel Number) in the Distribution System Parameter Set field of the response. So the STA can identify the channel on which the response is received, and then it will filter the probe request that is not received on channels of the POCG to which the probing channel belongs.
- **-In the step 204**, the STA compensates the signal strength value of the probe response by using the compensatory values determined in the step 201 so as to obtain the comparatively actual channel quality of the channel on which the AP is working. The signal strength value of the received probe response is compensated by using one of the compensatory values based on the channel separation number, i.e., the compensatory values S1 and S2 are used for channels with channel separation 1 and channel separation 2 respectively while the signal strength value of a channel with channel separation 0 generally doesn't need compensation.

According to the present embodiment, it should be understood that channel qualities of all channels in a POCG can be determined by using a signal probe request, which improves the determination efficiency.

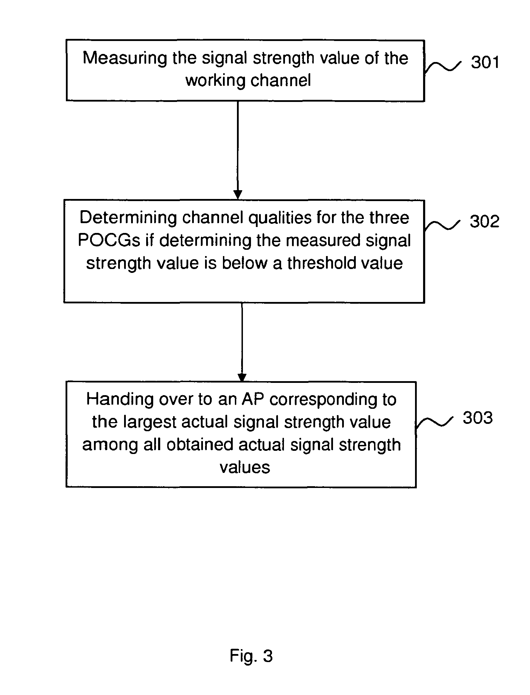

The present embodiment also describes a method providing fast link-layer handover in WLAN environment by using the OCP method, which intends to reduce the handover latency. Fig. 3 is a flow chart illustrating a method for handover between APs according to the present embodiment of the invention. Assuming the STA is currently working on the channel 3, so the three POCGs may be determined by the STA as {1, 2, 3, 4}, {5, 6, 7, 8} and {9, 10, 11}, and the channels 3, 7 and 10 are chosen by the STA as the probing channels of the three POCGs.
- **In the step 301**, the STA periodically measures the signal strength value of the working channel of its serving AP. It should be understood that the signal strength value is only one possible parameter to characterize the channel quality and that other parameters may be used.
- **In the step 302**, upon determining the signal strength value is below a threshold value that is predetermined and stored in the STA, the STA uses above the described method to determine channel qualities for the three POCGs respectively so as to obtain all actual signal strength values of the available APs. Here, all actual signal strength values of the available APs are determined by using the signal strength values of probe responses and the compensatory value(s).
- **In the step 303**, the STA is handed over from its current AP to an AP corresponding to the largest actual signal strength value among all obtained actual signal strength values if the signal strength value of the serving AP is not the largest. In this step, after the STA decides to carry out the handover, it will break its current connection with its original serving AP and then switch to the channel corresponding to the largest signal strength value. Herein, the STA may choose an AP providing better channel quality than the original AP other than the AP provides the best channel quality.

Furthermore, the present embodiment also provides a feature trying to avoid packet loss during the channel probing. Because the current working channel of the STA is chosen as the probing channel for its POCG, the STA need not switch channel to send probe requests and receive probe responses so that the current data transmission is not broken. As to the other two POCGs, the STA needs to switch from its current working channel to the probing channel of the POCG, which will result in the suspension of current data transmission between the STA and its original serving AP. In order to reduce the impact of the packet loss caused by the channel probing, the STA sends a power save mode (PSM) request, which normally is a null frame with power management bit set, to its serving AP to request it to buffer the inbound (from the AP to the STA) traffic. Also, the STA starts to buffer outbound (from the STA to the AP) traffic. After the STA receives the PSM response from its serving AP, the STA switches its channel to a probing channel of one of the other two POCGs, sends probe requests on the probing channel of that POCG and waits to receive the probe response from the AP working on the channel overlapped with the probing channel. After receiving all probing responses from APs through the probing channel, the STA compensates the signal strength value of the receives probing responses, switches its channel back to its original working one, continues the original data transmission for a period and conducts the same actions to probe the channel quality of the last POCGs.

The STA switches back to normal data transmission with its original serving AP between the channels probing of two POCGs instead of probing all POCGs consecutively. Further, the AP and the STA try to buffer more data before probing a POCG so as to reduce the impact of packet loss during the channel probing of the POCG. However, it should be understood that the STA can also probe all POCGs consecutively. Furthermore, it should also be understood that it need not modify the AP so as to avoid the cost spent on the protocol modification in the AP.

According to the present embodiment, it should be understood that the detection of the channel quality is carried out without breaking the data connection between the STA and its serving AP. Furthermore, the potential impact on current data traffic caused by the detection of each POCG is minimized by data buffering in the STA and its serving AP.

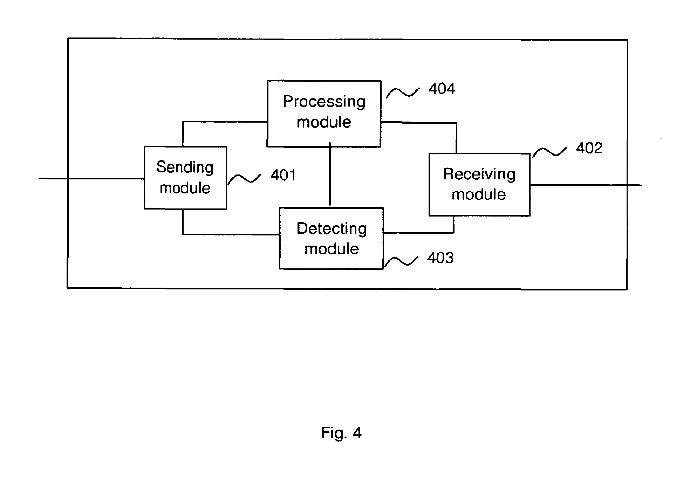

Fig. 4 is a block diagram of a STA according to the embodiment of the present invention. The STA comprises a sending module 401, a receiving module 402, a detection module 403, a processing module 404 and a storage module (not shown), that function as follows:
- -The sending module 401 is configured to transmit messages including the probe requests.
- -The receiving module 402 is configured to receive messages including the probe responses from the AP(s).
- -The storage module is configured to permanently or temporarily store some parameters.
- -The detection module 403 is configured to detect channel qualities of a certain group. The parameters of the certain group, such as which channel is classified into which group, this group includes which channels, which channel is the probing channel of this group, etc., are pre-stored in the storage module and/or dynamically determined by the processing module 404. To be detailed, it sends at least one probe request on the probing channel of the certain group through the sending module 401, receives probe responses from the APs whose working channels are overlapped with the probing channel, filters out the probe response the conveying channel of which does not belong to the certain group, and compensates the signal strength values of the filtered probe responses by using compensatory values. The compensatory values are determined by using above introduced method and are stored in the storage module.
- -The processing module 404 is configured to invoke the detection module 403 to detect channel qualities according to its detection strategy, such as detecting all channels on a group by group basis, or merely detecting a certain group. After obtaining the compensated signal strength values from the detection module, it will handover to an AP whose compensated signal strength value is larger than that of the originally serving AP, preferably the AP corresponding to the largest compensated signal strength value among all values.

Furthermore, in order to be proactive to poor channel quality, a threshold value is determined and stored in the storage module and the processing module 404 periodically requests the detection module 403 to detect the channel quality of its currently used channel. If the channel quality of the currently used channel is found to be below the threshold value, the processing module 404 will invoke the detection module 403 to detect the channel quality of a certain group, or even all channels, to find an AP capable of providing better channel quality. Moreover, the processing module 404 can periodically invoke the detection module to detect channel qualities of a certain group regardless of whether it is configured to monitor the channel quality of its currently used channel or not.

According to a variant of the present embodiment, the STA periodically determines the channel quality of all channels or a certain group of channels regardless whether the signal strength of the working channel of its serving AP is below a predetermined threshold value or not. And once it detects another AP than the current AP providing a better signal quality on another channel, it will carry out a handover to that AP.

According to a variant of the present embodiment, it is not necessary to divide the channels into POCG, which means the STA chooses several channels as the probing channels as long as these channels are chosen so that every one of the 11 channels overlaps one of the probing channels, and then calculates all received probe responses without filtering any probe response. Although there may be some redundant probe responses conveyed on the same channel, the STA can choose one among these probe responses representative of the channel quality, such as the one the conveying channel of which is the closest to the probing channel, i.e., the channel having the minimum channel separation number to the probing channel..

According to a variant of the present embodiment, the STA may send probe requests several times so as to obtain an average signal strength value for a channel which may more correctly reflect the channel quality than using a single probe request.

The STA can be a device with a wireless network interface, such as a personal computer, a personal digital assistant, a smart phone etc.

The method can be applied to devices and networks working with overlapping wireless channels other than the one described in the embodiment.

According to a variant of the present embodiment, the 11 channels can be divided into various group other than that described above, as long as every channel of each group overlaps the probing channel of that group, for example, the 11 channels are divided into 6 groups, i.e. {1, 2}, {3, 4}, {5, 6}, {7, 8}, {9, 10} and {11}. Furthermore, the division of 11 channels into groups is not necessary. The STA can send probe requests on several predetermined probing channels of the 11 channels respectively, and receive the probe response from AP(s), herein it may discard some probe response based on the channel separation number between the probing channel and the channel carrying this probe response, for example, dropping the probe response whose carrying channel has a channel separation number of more than 3 to the probing channel. And at last, the STA determines the channel qualities based on the probe responses.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the invention as defined by the appended claims.

## Claims

1. A method for determining channel quality for a second channel among a plurality of channels, wherein, said second channel is overlapping with a first channel in frequency and a client device is working on the first channel, and wherein a channel separation number between a channel sending a request message for probing channel quality and a channel on which a response message is carried refers to separation distance in frequency between center frequencies of the channel sending a request message for probing channel quality and the channel on which a response message is carried, wherein said method comprising at the side of the client device, the steps of:
sending a request message for probing channel quality through said first channel (202);
receiving a response message carried on said second channel in response to said request message through said first channel (203); and
determining the channel quality of said second channel by, using a compensatory value corresponding to channel separation number referring to the separation distance between said first channel and said second channel to compensate signal strength value of said response message.

2. The method according to the claim 1, **characterized by** further comprising:
in response to said request message, receiving, through said first channel, a response message on a third channel wherein said third channel is overlapping with said first channel in frequency; and
determining the channel quality of said third channel by using a compensatory value corresponding to channel separation number between said first channel and said third channel to compensate signal strength value of said response message.

3. The method according to claim 1 or 2, **characterized in that** the request message is sent at least twice, and the channel quality is determined based on an average value of the response messages, each corresponding to one of the sent request messages.

4. The method according to any of the claims 1 to 3, **characterized by** further comprising the step of:
dividing all channels into at least two groups, wherein, a channel for sending request messages is selected for each group, and the selected channel in each group overlaps with any other channels in its group in frequency;
in order to determine channel quality of a particular group which said first channel belongs to and is selected for sending request messages, receiving, through said first channel, all response messages carried in channels belonging to said particular group.

5. The method according to the claim 4, **characterized by** further comprising:
receiving, through said first channel, a response message carried in a fourth channel that is overlapping with said first channel in frequency but does not belong to said particular group; and
discarding said response message carried over said fourth channel.

6. The method according to any of claims 1 to 5, **characterized by** further comprising the step of:
determining at least one compensatory value corresponding to at least one channel separation number (201);
and wherein the step of determination of the channel quality further comprises:
determining channel separation number between the channel sending the request message and the channel on which the response message is carried;
determining a compensatory value corresponding to the determined channel separation number; and
compensating signal strength value of the response message by using the determined compensatory value.

7. The method according to the claim 1, wherein, it further comprises:
besides the response message carried on said second channel, in response to said request message, receiving at least response message carried on at least one other channel; and
determining the channel quality of the at least one other channel by using a compensatory value corresponding to channel separation number between said first channel and said at least one other channel;
switching said client device from said first channel to a channel among said second channel and said at least one other channel providing a better channel quality than said first channel.

## Patentansprüche

1. Verfahren zum Bestimmen der Kanalqualität für einen zweiten Kanal unter mehreren Kanälen, wobei sich der zweite Kanal in Bezug auf die Frequenz mit einem ersten Kanal überschneidet und wobei auf dem ersten Kanal eine Client-Vorrichtung arbeitet und wobei sich eine Kanalabstandszahl zwischen einem Kanal, der eine Anforderungsnachricht zum Prüfen der Kanalqualität sendet, und einem Kanal, auf dem eine Antwortnachricht übermittelt wird, auf einen Frequenzabstand zwischen den Mittenfrequenzen des Kanals, der eine Anforderungsnachricht zum Prüfen der Kanalqualität sendet, und des Kanals, auf dem die Antwortnachricht übermittelt wird, bezieht, wobei das Verfahren auf Seiten der Client-Vorrichtung die folgenden Schritte umfasst:
Senden einer Anforderungsnachricht zum Prüfen der Kanalqualität über den ersten Kanal (202);
Empfangen einer auf dem zweiten Kanal übermittelten Antwortnachricht in Reaktion auf die Anforderungsnachricht über den ersten Kanal (203); und
Bestimmen der Kanalqualität des zweiten Kanals unter Verwendung eines Kompensationswerts, der der Kanalabstandszahl, die sich auf den Abstand zwischen dem ersten Kanal und dem zweiten Kanal bezieht, entspricht, um den Signalstärkewert der Antwortnachricht zu kompensieren.

2. Verfahren nach Anspruch 1, ferner **gekennzeichnet durch**:
Empfangen einer Antwortnachricht auf einem dritten Kanal über den ersten Kanal in Reaktion auf die Anforderungsnachricht, wobei sich der dritte Kanal in Bezug auf die Frequenz mit dem ersten Kanal überschneidet; und
Bestimmen der Kanalqualität des dritten Kanals unter Verwendung eines Kompensationswerts, der einer Kanalabstandszahl zwischen dem ersten Kanal und dem dritten Kanal entspricht, um den Signalstärkewert der Antwortnachricht zu kompensieren.

3. Verfahren nach Anspruch 1 oder 2, **dadurch gekennzeichnet, dass** die Anforderungsnachricht mindestens zweimal gesendet wird und dass die Kanalqualität auf der Grundlage eines Durchschnittswerts der Antwortnachrichten, die jeweils einer der gesendeten Anforderungsnachrichten entsprechen, bestimmt wird.

4. Verfahren nach einem der Ansprüche 1 bis 3, ferner **gekennzeichnet durch** den folgenden Schritt:
Aufteilen aller Kanäle in mindestens zwei Gruppen, wobei für jede Gruppe ein Kanal zum Senden von Anforderungsnachrichten ausgewählt wird und wobei sich der ausgewählte Kanal in jeder Gruppe mit irgendwelchen anderen Kanälen in seiner Gruppe in Bezug auf die Frequenz überschneidet;
Empfangen aller Antwortnachrichten, die in Kanälen übermittelt werden, die zu der bestimmten Gruppe gehören,
über den ersten Kanal, um die Kanalqualität einer bestimmten Gruppe, zu der der erste Kanal gehört und für die er zum Senden von Antwortnachrichten ausgewählt worden ist, zu bestimmen.

5. Verfahren nach Anspruch 4, ferner **gekennzeichnet durch**:
Empfangen einer in einem vierten Kanal, der sich mit dem ersten Kanal in Bezug auf die Frequenz überschneidet,
aber nicht zu der bestimmten Gruppe gehört, übermittelten Antwortnachricht über den ersten Kanal; und
Verwerfen der über den vierten Kanal übermittelten Antwortnachricht.

6. Verfahren nach einem der Ansprüche 1 bis 5, ferner **gekennzeichnet durch** den folgenden Schritt:
Bestimmen mindestens eines Kompensationswerts, der mindestens einer Kanalabstandszahl entspricht (201);
und wobei der Schritt der Bestimmung der Kanalqualität ferner umfasst:
Bestimmen einer Kanalabstandszahl zwischen dem Kanal, der die Anforderungsnachricht sendet, und dem Kanal, auf dem die Antwortnachricht übermittelt wird;
Bestimmen eines Kompensationswerts, der der bestimmten Kanalabstandszahl entspricht; und
Kompensieren des Signalstärkewerts der Antwortnachricht unter Verwendung des bestimmten Kompensationswerts.

7. Verfahren nach Anspruch 1, das ferner umfasst:
Empfangen mindestens einer auf mindestens einem anderen Kanal übermittelten Antwortnachricht neben der auf dem zweiten Kanal übermittelten Antwortnachricht in Reaktion auf die Anforderungsnachricht; und
Bestimmen der Kanalqualität des mindestens einen anderen Kanals unter Verwendung eines Kompensationswerts, der der Kanalabstandszahl zwischen dem ersten Kanal und dem mindestens einen anderen Kanal entspricht;
Schalten der Client-Vorrichtung von dem ersten Kanal zu einem Kanal unter dem zweiten Kanal und dem mindestens einen anderen Kanal, der eine bessere Kanalqualität als der erste Kanal bereitstellt.

## Revendications

1. Procédé pour déterminer la qualité de canal pour un second canal parmi une pluralité de canaux, dans lequel ledit second canal chevauche un premier canal au niveau de la fréquence et un dispositif client fonctionne sur le premier canal,
et dans lequel un numéro de séparation de canal entre un canal transmettant un message de demande pour évaluer la qualité du canal et un canal transportant un message de réponse renvoyant à la distance de séparation au niveau de la fréquence entre les fréquences de centre du canal transmettant un message de demande pour évaluer la qualité du canal et le canal sur lequel un message de réponse est transporté, dans lequel ledit procédé comprend, du côté du dispositif client, les étapes de :
envoi d'un message de demande pour évaluer la qualité du canal via ledit premier canal (202) ;
réception d'un message de réponse transporté sur ledit second canal en réponse audit message de demande via ledit premier canal (203) ; et
détermination de la qualité du canal dudit second canal par l'utilisation d'une valeur compensatoire correspondant au numéro de séparation du canal renvoyant à la distance de séparation entre ledit premier canal et ledit second canal afin de compenser la valeur de la force du signal dudit message de réponse.

2. Procédé selon la revendication 1, **caractérisé en ce qu'**il comprend en outre :
en réponse audit message de demande, la réception, via ledit premier canal, d'un message de réponse sur un troisième canal dans lequel ledit troisième canal chevauche ledit premier canal au niveau de la fréquence ; et
détermination de la qualité du canal dudit troisième canal par l'utilisation d'une valeur compensatoire correspondant au numéro de séparation du canal entre ledit premier canal et ledit troisième canal afin de compenser la valeur de la force du signal dudit message de réponse.

3. Procédé selon la revendication 1 ou 2, **caractérisé en ce que** le message de demande est transmis au moins deux fois, et la qualité de canal est déterminée en fonction d'une valeur moyenne relative aux messages de réponse, chacune correspondant à un des messages de demande transmis.

4. Procédé selon l'une des revendications 1 à 3, **caractérisé en ce qu'**elle comprend en outre l'étape suivante :
division de tous les canaux en au moins deux groupes, où un canal pour transmettre des messages de demande est sélectionné pour chacun des groupes, et le canal sélectionné dans chaque groupe chevauche n'importe quel autre canal de son groupe au niveau de la fréquence ;
afin de déterminer la qualité du canal d'un groupe particulier auquel ledit premier canal appartient et est sélectionné pour transmettre des messages de demande, recevant, via le premier canal, tous les messages de réponse transportés sur des canaux appartenant audit groupe spécifique.

5. Procédé selon la revendication 4, **caractérisé en ce qu'**il comprend en outre :
la réception, via ledit premier canal, d'un message de réponse transporté sur un quatrième canal qui chevauche ledit premier canal au niveau de la fréquence mais n'appartient pas audit groupe spécifique ; et
la suppression dudit message de réponse transporté sur ledit quatrième canal.

6. Procédé selon l'une des revendications 1 à 5, **caractérisé en ce qu'**il comprend en outre l'étape suivante :
détermination d'au moins une des valeurs compensatoires correspondant à au moins un numéro de séparation de canal (201) ;
et où l'étape de détermination de la qualité du canal comprend en outre :
la détermination d'un numéro de séparation de canal entre le canal transmettant le message de demande et le canal sur lequel le message de réponse est transporté ;
la détermination d'une valeur compensatoire correspondant au numéro de séparation du canal déterminé et :
la compensation de la valeur de la force du signal du message de réponse à l'aide de la valeur compensatoire déterminée.

7. Procédé selon la revendication 1, dans lequel il comprend en outre :
en plus du message de réponse transporté sur ledit second canal, en réponse audit message de demande, réception du message de réponse au moins transporté sur au moins un autre canal ; et
la détermination de la qualité du canal d'au moins un autre canal à l'aide d'une valeur compensatoire correspondant au numéro de séparation du canal entre ledit premier canal et ledit au moins un autre canal ;
la commutation dudit dispositif client dudit premier canal à un canal parmi ledit second canal et ledit au moins un autre canal fournissant une meilleure qualité de canal que ledit premier canal.
